# EUROPEAN PATENT SPECIFICATION

(11) **EP 2 253 400 B1**
(45) Date of publication and mention of the grant of the patent: **21.03.2012**
(21) Application number: 09160512.1
(22) Date of filing: 18.05.2009
(51) Int. Cl.: B23B 35/00, B23B 49/02

(54) **Method for mounting an appliance in a building member, assembly and patch**
Verfahren zur Montage eines Gerätes in einem Bauelement , Anordnung und Patch
Procédé pour le montage d'un appareil dans un élément de constuction, ensemble et patch

(43) Date of publication of application: 24.11.2010
(73) Proprietor: Studio Rublek B.V., 1062 CL Amsterdam (NL)
(72) Inventor: Rublek, Aleksandar, 1062 CL Amsterdam (NL)
(74) Representative: van Looijengoed, Ferry Antoin Theodorus

(56) References cited:
- EP-A- 1 970 148
- GB-A- 2 313 563
- NL-C2- 1 014 667

## Description

The present disclosure relates to improvements in mounting an appliance in building members, in particular building members of building board material, such as plaster board ceilings and/or walls.

Interior walls of buildings have been traditionally covered with a finishing layer of plaster. More recently, building board materials such as drywall boards and/or plasterboards have been commonly used for constructing and/or finishing ceilings and/or walls in domestic buildings, offices etc. It has been well known that when providing a hole in such finishing materials by cutting or drilling, the edge of the hole may be subject to cracking and that parts may crumble off. This negatively affects the aesthetic appearance of the hole. It also decreases mechanical aspects of the hole such as its size and strength of the hole and its surrounding material for mounting and holding further objects. Repairing such damaged edges requires a certain amount of skill and costs time and money.

It has thus become customary to provide objects to be mounted in a hole in a building member, e.g. lamp fixtures mounted to a building board ceiling, with flanges covering cracked material and/or ragged edges surrounding the hole, so as to hide these from view. Although obviating repairing edges, this increases material costs and manufacturing costs of such objects. The flanges further make the objects conspicuous.

To reduce visibility of the flanges, the flanges may be sunk into a recess in the surface of the building member. This, however, complicates manufacturing and/or mounting of the objects and/or the building member concerned, further increasing costs. Moreover, the edges of the recesses may be subject to the same problems discussed above.

It is noted that adhesive drilling aids are known from GB 2 313 563, EP 1 970 148 and NL1 014 667. EP1 970 148 A discloses a method for mounting an appliance in a building member comprising the features of the preamble of claim 1, and an assembly comprising the features of the preamble of claim 2. GB 2 313 563 A discloses a patch comprising the features of the preamble of claim 5.

For improving the provision of apertures in building members, in particular building board materials such as a wall panel or a plaster board, a method, an assembly and a patch according to the appended claims are provided.

The patch provides a reinforcement layer to the building member preventing formation or progression of cracks in the surface of the building member and maintaining inadvertently loosened portions of the building member substantially in place when cutting or drilling a hole through the patch into the building member. The patch being attached to the surface of the building member by an adhesive layer also obviates penetrating or otherwise damaging the building member (surface) for attaching the patch, preventing cracking and possible crumbling of the building member. Thus degradation of the edge of the hole is prevented or at least reduced.

The gradual thickness variation of the patch provides a relatively strong portion towards a centre of the patch and a relatively thin portion at the circumferential edge of the patch. This allows working the patch material, such as by cutting and/or drilling, without warping of the patch material and it provides reinforcement to the edge of the hole in the building member. At the same time a step edge of the circumferential edge of the patch to the surface of the building member is reduced, reducing visibility of the patch. It has been found that the gradual decrease of the thickness from the centre portion towards the circumferential edge of the patch with a slope, in particular a substantially linear or concave slope, corresponding to an average angle of less than about 6 degrees generally masks non-planarity of the patch and significantly reduces visibility of the patch with respect to a building member surface onto which the patch is attached, in particular when that building member surface is substantially plane. Consequently, the patch may be left in position after cutting the hole without being conspicuous, providing substantially permanent reinforcement of the edge of the hole and preventing damaging (the edge of) the hole upon removing the patch as the adhesion of building member material to the patch may prove stronger than the cohesion of that building member material and portions of the building member might be pulled off when removing the patch.

For providing a substantially straight edge to the hole, at least the centre portion of the patch may suitably have a substantially homogeneous constitution or be made of one or more substantially homogeneous materials providing a substantially homogeneous internal stress and strain distribution. This assists preventing initiation and/or progression of cracks and/or ruptures in the patch material when penetrated for making the hole, which cracks and/or ruptures may progress into the building member, and/or inducing cracks and/or ruptures in the patch material by defects in the building member material.

The assembly of the building member with the patch allows mounting an appliance, such as a light fixture, into the hole with reduced damage to the edge of the hole.

These and other aspects will be explained hereafter with reference to the appended schematic drawings. In these drawings, like elements are identified with like reference numerals. Sizes may be exaggerated and/or be not to scale for reasons of clarity. In the drawings,
Fig. 1 shows a plan view of an embodiment of a patch;
Fig. 2 is a schematic side view of the patch of Fig. 1;
Fig. 3 is a schematic cross-sectional view of an assembly of a building board and the patch of Fig. 1, prior to making a hole through the assembly;
Fig. 4 is a schematic cross-sectional view of the assembly of Fig. 3 provided with a hole through the patch and the building board;
Fig. 5 is a schematic plan view of another embodiment of a patch;
Fig. 6 is a schematic side view of another embodiment of a patch.

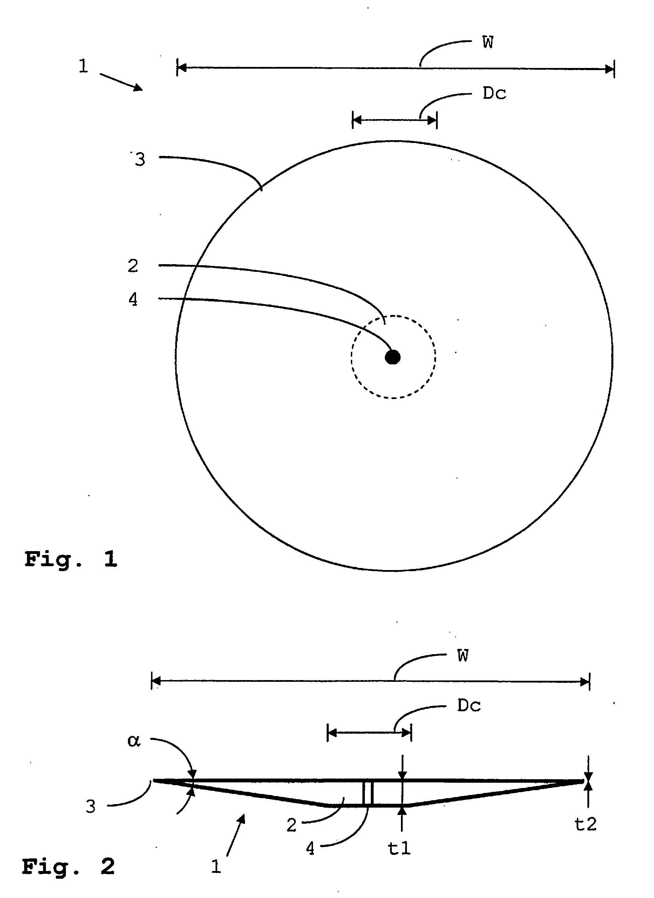

Figs. 1 and 2 show a first embodiment of a patch 1, having a centre portion 2, a circumferential edge 3 and a central through hole 4. The patch is a substantially round sheet-like object, having a diameter W. The patch has a centre portion 2 which in this embodiment is substantially plane and which has a first thickness t1 and a diameter Dc. The patch has a gradually decreasing thickness from the first thickness t1at its centre portion 2 to a second thickness t2 at its circumferential edge 3 which is less than the first thickness t1 The rate of decrease provides a slope in cross-section which is substantially linear at an angle α of less than about 6 degrees. It should be noted that an angle of about 5.7 degrees corresponds to a slope of about 1 to 10. The optional through hole 4 facilitates aligning the patch 1 to a marking on the surface to which the patch 1 is to be applied.

A slope with an angle α of e.g. about 3 degrees may be preferred to further mask non-planarity of the patch. An angle α of about 1 degree allows providing a centre portion thickness t1 of about 1 millimeter with a theoretical circumferential edge thickness t2 of zero at a distance of about 6 cm away from the 1 mm thick portion. An even smaller angle α may also be used. A suitable angle α may be determined by factors such as available surface area for adhering the patch and the relation of desired first and second thicknesses t1, t2.

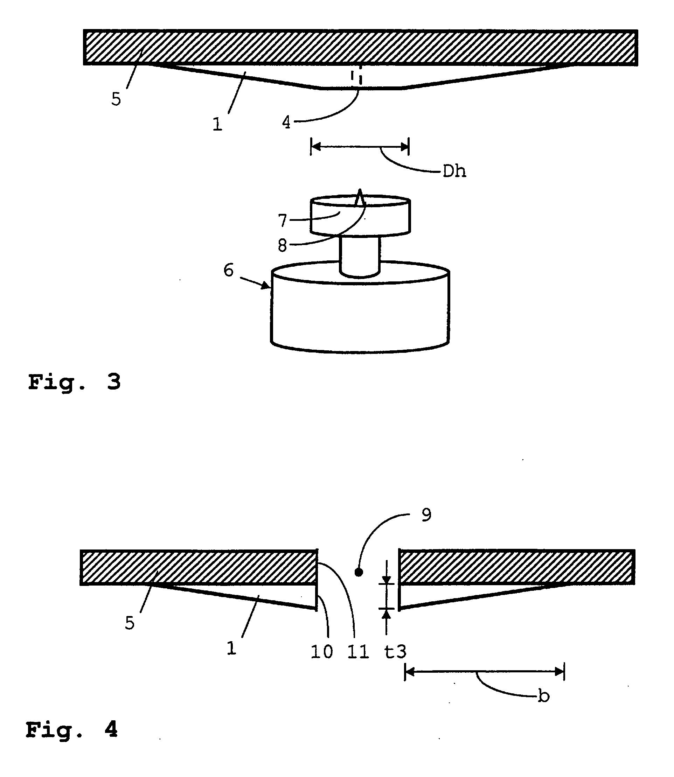

Fig. 3 shows a side view of the patch 1 adhered to a building member in 5 in the form of a substantially plane plaster board ceiling. Fig. 3 further schematically indicates a drill 6 provided with a large-aperture drill bit 7 having a diameter Dh and comprising a centering tip 8.

For drilling a hole with the diameter Dh through the building board 5, the patch 1 is attached in a desired position by an adhesive layer. Preferably, the patch 1 is provided as an adhesive object, e.g. as a sticker, such as a sticker which may be peeled off a non-stick backing material (shortly) prior to use. Preferably, care is taken when attaching the patch 1 to the building board 5 to prevent creases and/or trapped air bubbles between the surface of the building panel 5 and the patch 1, e.g. by striking or rolling over the patch with a suitable tool, so as to provide even adhesion between the building member 5 and the patch 1 over the surface area of the patch. Particular attention may be paid to the circumferential edge 3 and a region of the patch 1 where the cut by the drill bit 7 is to be made.

Next, a hole 9 is drilled (Fig. 4) through the patch and into and through the building board 5. Accurate positioning of the hole is facilitated by centering the centering tip 8 into the through hole 4. The patch 1 prevents cracking and crumbling of the material of the building board 5 adjacent the hole 9 and allows forming a hole 9 with a wall comprising a first wall portion 10 inside the patch and a second wall portion 11 inside the building member which wall is substantially continuous from the first wall portion 10 to the second wall portion 11. The diameter of the hole 9 may be substantially constant, providing a substantially straight edge and wall, or it may vary, e.g. so as to provide a tapering hole 9 (not shown). The patch 1 reinforces the edge of the hole 9.

The hole 9 facilitates mounting an appliance to the building member through or at least partially into the hole 9. The reinforcing effect of the patch 1 on the edge of the hole 9 with the building member 5 prevents damaging the edge. The angle α of the patch 1 renders it inconspicuous. A suitable angle α may depend on the relation of the first thickness t1 to a thickness t3 of the patch 1 at the edge of the hole 9, which may be less than or equal to t2 (t1 < t3 ≤ t2), and a width b of the portion of the patch 1 remaining after cutting the hole (b = (W - Dh)/2), which may be between about 0.1 Dh to 1 Dh, preferably between about 1/3 Dh to 2/3 Dh, e.g. about 1/2 Dh.

The hole 9 is sized such that a light fixture is mounted into the hole, which light fixture is a so-called trimless down-light or spot light, which does not comprise or require a flange surrounding the hole. Using the patch 1 allows mounting a trimless spot light substantially without requiring further finishing operations such as repairing the edge of the hole, and it provides a smooth and stylish finish to the mounted light.

Most fine-grain wood sorts and more in particular metals and/or most plastic materials are suitable materials for a patch 1. Fibrous or fibre-reinforced materials may be suitable, although coarse fibrous material may leave a ragged edge and/or surface when cut or drilled. It should be noted that the sharpness of an edge formed in a particular material, and thus the suitability of a particular patch material, may depend on tools and/or materials used to work the material, such as sharpness and rotational velocity of a drill bit 7. Particular building member materials may require particular tools and/or materials, such as a particular angle of attack of a drill-tip 7, 8 or serration size of a circular sawing-drill 7. This may affect the suitability of some patch materials to be combined with some building board materials. Paper or cardboard may be suitable in some cases.

For reducing visibility of the patch to a minimum, the thickness t2 of the circumferential edge should be made as thin as possible. Some materials e.g. aluminium or plastics such as polyurethane, may allow thickness variations over a single object from foil-like values of micrometers to sheet-like values of several millimetres.

Visibility of the patch may be further reduced if the appearance of at least a portion of the patch along the circumferential edge substantially corresponds to the texture of the surface onto which the patch is to be attached, in particular the thickness and the shape of the circumferential edge. Thus, in addition, or as an alternative, at least the circumferential edge of the patch may be made to substantially blend into the surface of the building member 5, such as by reducing the thickness t2 of the circumferential edge to be on the same order of magnitude as the roughness of surface of the building member 5 onto which the patch 1 is to be attached.

Surface roughness may be determined by determining height differences of peaks and troughs with respect to an average surface position, e.g. a plane, over a predetermined surface area, e.g. over the surface area to be covered by the patch or over a surface area around an intended position of the circumferential edge. A measure of the surface roughness may then be defined as the height difference between peaks and troughs in the surface or of a band of about 2σ (twice the standard deviation) on either side of the average surface height, which corresponds to about 95% of the surface concerned. A circumferential edge 3 having a thickness of below about 3 times the roughness is found to lead to a significantly reduced visibility of the edge. A lesser thickness, about equal to once the roughness will minimise visibility of the edge. The surface of the patch 1 itself may advantageously have a similar or corresponding roughness, to further reduce its visibility. The angle of the slope of a relatively rough patch surface may then be defined as an average linear angle, with reference to the average surface position along the patch surface.

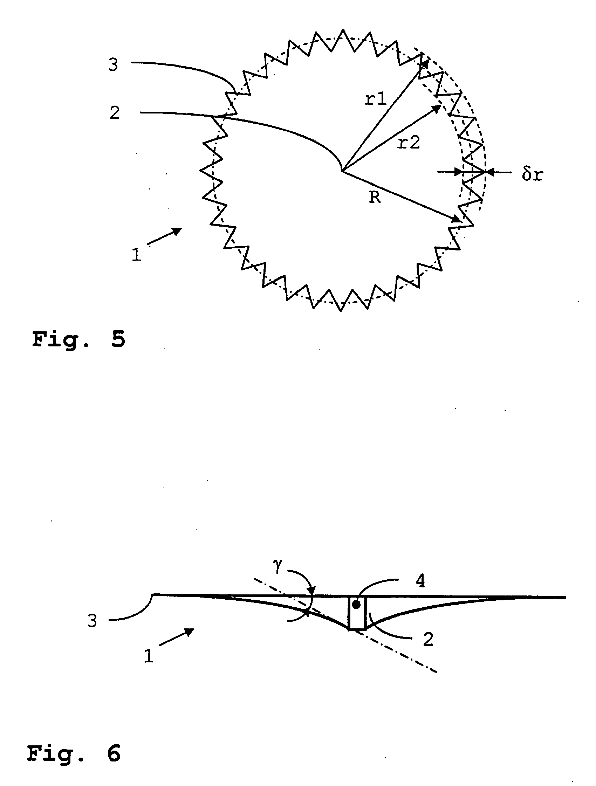

Fig. 5 shows another embodiment of a patch 1 having a centre portion 2 and a circumferential edge 3. The patch 1 shown in Fig. 5 does not have a through hole 4 and does not have a substantially plane centre portion 2; the first thickness t1 may be defined at the mid-point of the patch 1.

In an embodiment lacking a plane centre portion and having a hole at the centre, the first thickness t1 may be defined by the thickness of the patch material at the edge of the hole 4.

Fig. 5 indicates that the circumferential edge 3 of the patch 1 may be corrugated wit respect to its width in a direction, e.g. a plane, in which the patch 1 extends in general. In Fig. 5 the patch 1 is substantially round having a regularly serrated circumferential edge oscillating between a maximum radius r1 and a minimum radius r2 with an amplitude δr about an average radius R determining the size W of the patch 1. Such corrugations, and in particular corrugations with irregular distance, periodicity and/or shape of deviations from an average circumferential edge trajectory, tend to blur the circumferential edge and reduce visibility of the patch 1, in particular when the size of the corrugations is of the same order of magnitude as the roughness of the building member surface onto which the patch 1 is to be attached and/or the roughness of the patch 1 itself.

The patch 1 may have a colour matching the colour of the surface of the building member 5 onto which the patch 1 is to be attached, or it may be transparent to reduce visibility. The patch 1 may be made or provided with a material which allows the patch to be plastered and/or painted with one or more materials that are suitable for plastering or painting the building member. Plastering and/or painting may further decrease a step-edge at the circumferential edge 3 of a patch 1 and thus further reduce visibility.

As an alternative, the patch 1 may be formed with a convex cross sectional shape as shown in Fig. 6. As indicated in Fig. 6 a tangent angle γ to the surface of the patch may be defined, which should be below about 6 degrees to prevent the patch from becoming conspicuous.

The invention is not restricted to the above described embodiments which can be varied in a number of ways within the scope of the appended claims. For instance the patch may have a different shape than round, e.g. substantially elliptical, polygonal such as substantially square, hexagonal, or it may be irregularly shaped. The shape of the patch may be chosen to correspond to the shape of the building member 5 and/or an appliance to be mounted into the hole. Instead of a through hole 4, a dimple or some other indication means may be provided.

A patch may comprise alignment markings, e.g. line segments at mutual angles of 90°, 60° and/or 45°.

Elements and aspects discussed for or in relation with a particular embodiment may be suitably combined with elements and aspects of other embodiments, unless explicitly stated otherwise, as it is defined in the claims.

## Claims

1. Method for mounting an appliance in a building member (5) such as a wall panel or a plaster board, comprising the step of:
making a hole (9) for the appliance in the building member (5),
comprising the steps of:
determining a size of a hole (9) to be made in the building member (5) for receiving the appliance;
providing a patch (1) having a centre portion (2) and a circumferential edge (3), the patch (1) having a size exceeding the size of the hole (9) to be made,
attaching the patch (1) to a surface of the building member (5) with an adhesive layer, covering the position and circumferential edge of the hole (9) to be made with the patch (1) ;
making the hole (9)through the patch (1) and into or through the building member (5), such that a remaining portion of the patch (1) surrounds the hole (9) ;
the method further comprising the step of : mounting an appliance at least partially into the hole (9)
**characterised in that** the patch (1) has a first thickness (t1) at the centre portion (2) and a second thickness (t2) at the circumferential edge (3) wherein the thickness of the patch between the centre portion (2) and the circumferential edge (3) gradually decreases with a, preferably substantially linear or concave, slope, the rate of decrease of the thickness between the centre portion (2) and the circumferential edge (3) of the patch corresponds to an average angle (α;γ) of less than about 6 degrees, and
**in that** the appliance comprises a trimless spot light and the patch forms a finish to the mounted appliance.

2. Assembly comprising a building member (5) such as a wall panel or a plaster board, and a patch (1) covering a portion of a surface of the building member (5),
the patch (1) having a centre portion (2) and a circumferential edge (3) and being attached to the surface of the building member (5) by an adhesive layer,
wherein the assembly comprises a hole (9) extending through the patch (1) into or through the building member (5),
wherein the hole (9) has a wall comprising a first wall portion (10) inside the patch and a second wall portion inside the building member (11), the wall being substantially continuous from the first wall portion (10) to the second wall portion (11),
wherein the assembly comprises an appliance mounted at least partially into the hole (9),
**characterised in that** the patch (1) has a first thickness (t1) at the centre portion (2) and a second thickness (t2) at the circumferential edge (3),
wherein the thickness of the patch (1) between the centre portion (2) and the circumferential edge (3) gradually decreases with a, preferably substantially linear or concave, slope, the rate of decrease of the thickness between the centre portion (2) and the circumferential edge (3) of the patch corresponds to an average angle (α;γ) of less than about 6 degrees and
**in that** the appliance comprises a trimless spot light and the patch forms a finish to the mounted appliance.

3. Assembly according to claim 2, wherein the surface of the building member (5) has a roughness and the second thickness (t2) of the patch (1) is less than about 3 times the roughness.

4. Assembly according to claim 2 or 3, wherein the surface of the building member (5) has a roughness and wherein at least a portion of the circumferential edge (3) of the patch (1) is regularly or irregularly corrugated, preferably with a modulation of less than about 3 times the roughness.

5. Patch (1) having a centre portion (2) and a circumferential edge (3) and being configured to be attached to the surface of a building member (5) by an adhesive layer,
wherein the patch has a first thickness (t1) at the centre portion (2) and a second thickness (t2) at the circumferential edge (3),
wherein the thickness of the patch between the centre portion (2) and the circumferential edge (3) gradually decreases with a, preferably substantially linear or concave, slope,
**characterised by** the rate of decrease of the thickness between the centre portion and the circumferential edge corresponding to an average angle (α;γ) of less than about 6 degrees and being configured for forming the finish to the mounted appliance of the method of claim 1, or of the assembly of any one of the claims 2-4.

6. Patch (1) according to claim 5, wherein at least the centre portion (2) of the patch is configured to provide a substantially straight edge to the hole (9) when penetrated.

7. Patch according to claim 5 or 6, wherein at least a portion of the patch (1) along the circumferential edge (3) is corrugated with respect to thickness and/or width.

8. Patch according to claim 5, 6 or 7, wherein the patch is adhesive.

9. Patch according to any one of claims 5-8, wherein the patch is transparent.

## Patentansprüche

1. Verfahren zur Montage eines Geräts in einem Gebäudeelement (5) wie beispielsweise in einer Wandplatte oder einer Gipsplatte mit dem Schritt
Erstellen eines Lochs (9) für das Gerät in dem Gebäudeelement (5),
mit den Schritten:
Bestimmung einer Größe eines Lochs (9), welches in dem Gebäudeelement (5), welches das Gerät aufnehmen soll, erstellt wird;
Bereitstellen eines Patchelements (1), welches einen zentralen Bereich (2) und eine umlaufende Kante (3) aufweist, wobei das Patchelement (1) eine Größe aufweist, die die Größe des zu erstellenden Lochs (9) übertrifft,
Anbringen des Patchelements (1) an die Oberfläche des Gebäudeelements (5) mit einer Klebeschicht, wobei das Patchelement (1) den Ort und die Kanten des mit dem zu erstellenden Lochs (9) überdeckt;
Erstellen des Lochs (9) durch das Patchelement (1) und in oder durch das Gebäudeelement (5), so dass ein verbleibender Teil des Patchelements (1) das Loch (9) umgibt;
wobei das Verfahren weiterhin den Schritt aufweist: Montieren des Geräts zumindest teilweise in dem Loch (9),
**dadurch gekennzeichnet, dass** das Patchelement (1) im zentralen Bereich (2) eine erste Dicke (t1) und an der umlaufenden Kante (3) eine zweite Dicke (t2) aufweist, wobei die Dicke des Patchelements (1) zwischen dem zentralen Bereich (2) und der umlaufenden Kante (3) graduell abnimmt mit einer vorzugsweise im Wesentlichen linearen oder konkaven Steigung, wobei die Rate, mit der die Dicke zwischen dem zentralem Bereich (2) und der umlaufenden Kante (3) des Patchelements (1) abnimmt, einem mittleren Winkel (α; γ) von weniger als ungefähr 6 Grad entspricht, und
dass das Gerät ein rahmenloses Spotlicht aufweist und das Patchelement einen Abschluss zum montierten Gerät bildet.

2. Vorrichtung mit einem Gebäudeelement (5), wie beispielsweise einer Wandplatte oder einer Gipsplatte, und einem Patchelement (1), welches einen Teil der Oberfläche des Gebäudeelements (5) abdeckt,
wobei das Patchelement (1) einen zentralen Bereich (2) und eine umlaufende Kante (3) aufweist und mit der Oberfläche des Gebäudeelements (5) durch eine Klebeschicht verbunden ist,
wobei die Vorrichtung ein Loch (9) aufweist, welches sich durch das Patchelement (1) hindurch in oder durch das Gebäudeelement (5) erstreckt,
wobei das Loch (9) eine Wand mit einem ersten Wandteil (10) in dem Patchelement und einem zweiten Wandteil im Gebäudeelement (11) aufweist, wobei die Wand im Wesentlichen fließend von einem ersten Wandteil (10) in einen zweiten Wandteil (11) übergeht,
wobei die Vorrichtung ein Gerät aufweist, das zumindest teilweise in dem Loch (9) montiert ist,
**dadurch gekennzeichnet, dass** das Patchelement (1) eine erste Dicke (t1) im zentralen Bereich (2) und eine zweite Dicke (t2) an der umlaufenden Kante (3) aufweist,
wobei die Dicke des Patchelements (1) zwischen dem zentralen Bereich (2) und der umlaufenden Kante (3) graduell abnimmt mit einer vorzugsweise im Wesentlichen linearen oder konkaven Steigung, wobei die Rate, mit der die Dicke zwischen dem zentralem Bereich (2) und der umlaufenden Kante (3) des Patchelements (1) abnimmt, einem mittleren Winkel (α; γ) von weniger als ungefähr 6 Grad entspricht, und
dass das Gerät ein rahmenloses Spotlicht aufweist und das Patchelement einen Abschluss zum montierten Gerät bildet.

3. Vorrichtung nach Anspruch 2, wobei die Oberfläche des Gebäudeelements (5) eine Rauheit aufweist und die zweite Dicke (t2) des Patchelements (1) weniger als das ungefähr 3-fache der Rauheit beträgt.

4. Vorrichtung nach Anspruch 2 oder 3, wobei die Oberfläche des Gebäudeelements (5) eine Rauheit aufweist und wobei wenigstens ein Teil der umlaufenden Kante (3) des Patchelements (1) regelmäßig oder unregelmäßig geriffelt ist, vorzugsweise mit einer Modulation von weniger als dem ungefähr 3-fachen der Rauheit.

5. Patchelement (1) mit einem zentralen Bereich (2) und einer umlaufenden Kante (3) und derart ausgestaltet, dass es mittels einer Klebeschicht auf der Oberfläche eines Gebäudeelements (5) angebracht werden kann,
wobei das Patchelement eine erste Dicke (t1) im zentralen Bereich (2) und eine zweite Dicke (t2) an der umlaufenden Kante (3) aufweist,
wobei die Dicke des Patchelements zwischen dem zentralen Bereich (2) und der umlaufenden Kante (3) graduell abnimmt mit einer vorzugsweise im Wesentlichen linearen oder konkaven Steigung,
**dadurch gekennzeichnet, dass** die Rate, mit der die Dicke zwischen dem zentralem Bereich und der umlaufender Kante abnimmt, einem mittleren Winkel (α; γ) von weniger als ungefähr 6 Grad entspricht und dass das Patchelement (1) ausgestaltet ist, den Abschluss zum montierten Gerät des Verfahrens nach Anspruch 1 oder der Vorrichtung nach einem der Ansprüche 2 bis 4 zu bilden.

6. Patchelement (1) nach Anspruch 5, wobei wenigstens der zentrale Bereich (2) des Patchelements derart ausgestaltet ist, dass er eine vorzugsweise gerade Kante des Lochs (9) bereitstellt, wenn er durchdrungen wird.

7. Patchelement nach einem der Ansprüche 5 oder 6, wobei wenigstens ein Teil des Patchelements (1) entlang der umlaufenden Kante (3) in Bezug auf Dicke und/oder Breite geriffelt ist.

8. Patchelement nach einem der Ansprüche 5, 6 oder 7, wobei das Patchelement klebend ist.

9. Patchelement nach einem der Ansprüche 5 bis 8, wobei das Patchelement transparent ist.

## Revendications

1. Procédé de montage d'un appareil dans un élément de construction (5) tel qu'un panneau mural ou une plaque de plâtre, comprenant l'étape qui consiste :
à ménager un trou (9) pour l'appareil dans l'élément de construction (5),
comprenant les étapes qui consistent :
à déterminer la taille du trou (9) à ménager dans l'élément de construction (5) pour recevoir l'appareil ;
à prévoir un patch (1) ayant une partie centrale (2) et un bord circonférentiel (3), la taille du patch (1) dépassant la taille du trou (9) à ménager,
à coller le patch (1) à une surface de l'élément de construction (5) à l'aide d'une couche adhésive, couvrant la position et le bord circonférentiel du trou (9) à ménager avec le patch (1) ;
à ménager le trou (9) à travers le patch et dans l'élément de construction (5) ou à travers celui-ci, de sorte qu'une partie restante du patch (1) entoure le trou (9) ;
le procédé comprenant en outre l'étape qui consiste :
à monter un appareil au moins partiellement dans le trou (9) ;
**caractérisé en ce que** le patch (1) a une première épaisseur (t1) au niveau de la partie centrale (2) et une deuxième épaisseur (t2) au niveau du bord circonférentiel (3) où l'épaisseur du patch entre la partie centrale (2) et le bord circonférentiel (3) diminue graduellement avec une pente, de préférence sensiblement linéaire ou concave, le taux de diminution de l'épaisseur entre la partie centrale (2) et le bord circonférentiel (3) du patch correspond à un angle moyen (α ; γ) inférieur à environ 6 degrés, et
**en ce que** l'appareil comprend un luminaire encastré et le patch forme un élément de finition pour l'appareil monté.

2. Ensemble comprenant un élément de construction (5) tel qu'un panneau mural ou une plaque de plâtre, et un patch (1) couvrant une partie d'une surface de l'élément de construction (5),
le patch (1) ayant une partie centrale (2) et un bord circonférentiel (3) et étant collé à la surface de l'élément de construction (5) à l'aide d'une couche adhésive,
où l'ensemble comprend un trou (9) s'étendant à travers le patch (1) dans l'élément de construction (5) ou à travers celui-ci,
où le trou (9) a une paroi comprenant une première partie de paroi (10) dans le patch et une deuxième partie de paroi dans l'élément de construction (11), la paroi étant essentiellement continue de la première partie de paroi (10) jusqu'à la deuxième partie de paroi (11),
où l'ensemble comprend un appareil monté au moins partiellement dans le trou (9),
**caractérisé en ce que** le patch (1) a une première épaisseur (t1) au niveau de la partie centrale (2) et une deuxième épaisseur (t2) au niveau du bord circonférentiel (3) ,
où l'épaisseur du patch (1) entre la partie centrale (2) et le bord circonférentiel (3) diminue graduellement avec une pente, de préférence sensiblement linéaire ou concave, le taux de diminution de l'épaisseur entre la partie centrale (2) et le bord circonférentiel (3) du patch correspond à un angle moyen (α ; γ) inférieur à environ 6 degrés et
**en ce que** l'appareil comprend un luminaire encastré et le patch forme un élément de finition pour l'appareil monté.

3. Ensemble selon la revendication 2, dans lequel la surface de l'élément de construction (5) présente une rugosité et la deuxième épaisseur (t2) du patch (1) est inférieure à environ 3 fois la rugosité.

4. Ensemble selon la revendication 2 ou 3, dans lequel la surface de l'élément de construction (5) présente une rugosité et où au moins une partie du bord circonférentiel (3) du patch (1) présente une ondulation régulière ou irrégulière, de préférence avec une modulation inférieure à environ 3 fois la rugosité.

5. Patch (1) ayant une partie centrale (2) et un bord circonférentiel (3) et étant configuré pour être collé à la surface d'un élément de construction (5) à l'aide d'une couche adhésive,
où le patch a une première épaisseur (t1) au niveau de la partie centrale (2) et une deuxième épaisseur (t2) au niveau du bord circonférentiel (3),
où l'épaisseur du patch entre la partie centrale (2) et le bord circonférentiel (3) diminue graduellement avec une pente de préférence pratiquement linéaire ou concave,
**caractérisé par** le taux de diminution de l'épaisseur entre la partie centrale (2) et le bord circonférentiel (3) correspondant à un angle moyen (α ; γ) inférieur à environ 6 degrés et étant configuré pour former un élément de finition pour l'appareil monté du procédé de la revendication 1, ou de l'ensemble de l'une quelconque des revendications 2 à 4.

6. Patch (1) selon la revendication 5, dans lequel au moins la partie centrale (2) du patch est configurée pour fournir un bord essentiellement droit au trou (9) lorsqu'il est pénétré.

7. Patch selon la revendication 5 ou 6 dans lequel au moins une partie du patch (1) le long du bord circonférentiel (3) est ondulée en termes d'épaisseur et/ou de largeur.

8. Patch selon revendication 5, 6 ou 7, dans lequel le patch est adhésif.

9. Patch selon l'une quelconque des revendications 5 à 8, dans lequel le patch est transparent.
